# FASCICULE DE BREVET EUROPEEN

(11) **EP 2 795 524 B1**
(45) Date de publication et mention de la délivrance du brevet: **20.02.2019**
(21) Numéro de dépôt: 12819091.5
(22) Date de dépôt: 18.12.2012
(51) Int. Cl.: G06F 21/44, G06F 21/60

(54) **PROCÉDÉ ET DISPOSITIF DE SÉCURISATION D'UNE APPLICATION INFORMATIQUE**
VERFAHREN UND VORRICHTUNG ZUR SICHERUNG EINER COMPUTERANWENDUNG
METHOD AND DEVICE FOR MAKING A COMPUTER APPLICATION SECURE

(30) Priorité: 20.12.2011 FR 1162036
(43) Date de publication de la demande: 29.10.2014
(73) Titulaire: Orange, 75015 Paris (FR)
(72) Inventeur: ASSADI, Houssem, F-14000 Caen (FR); HABERMACHER, Loïc, F-75015 Paris (FR); LOUET, Erwan, F-35300 Fougeres (FR)
(74) Mandataire: Delumeau, François Guy
(86) Numéro de dépôt international: PCT/FR2012/052979
(87) Numéro de publication internationale: WO 2013/093330

(56) Documents cités:
- FR-A1- 2 893 732
- GB-A- 2 434 662
- US-A1- 2007 043 681
- US-A1- 2008 209 223
- US-A1- 2011 119 484
- US-B1- 6 950 949

## Description

### Arrière-plan de l'invention

La présente invention se situe dans le domaine de la sécurisation d'une application informatique s'exécutant sur un terminal.

Plus précisément, l'invention se situe dans le domaine de la sécurisation des applications informatiques sollicitant la saisie de données sensibles d'un utilisateur, par exemple un mot de passe ou un code secret.

L'application informatique en question est créée par un fournisseur d'applications. L'invention vise à empêcher qu'une application frauduleuse créée par un tiers malveillant, obtienne de telles données au moment où elles sont saisies par l'utilisateur.

Dans ce contexte, un problème particulier a été identifié dans lequel une application frauduleuse introduite sur le terminal à l'insu de l'utilisateur s'exécute en tache de fond sur le terminal et superpose sur l'écran de saisie de l'application piratée, un écran de saisie frauduleux, copie exacte de cet écran de saisie, pour récupérer les données saisies par l'utilisateur.

Dans l'état actuel de la technique, on connait des mécanismes de sécurisation visant à combiner l'écran de saisie des données sensibles avec une image connue de l'utilisateur.

Malheureusement la sécurisation proposée par ce mécanisme n'est pas suffisante car le fournisseur d'applications ne peut garantir l'authenticité de cette image connue. La demande de brevet FR2893732 A1 divulgue un procédé permettant à l'utilisateur d'authentifier un système de confiance en interagissant avec lui à travers son interface et en attribuant un caractère dynamique aux données d'authentification. Les critères d'authentification comprennent non seulement des données statiques mais aussi des données comportementales, c'est à dire des réponses attendues du système en réaction à des événements déclenchés par l'utilisateur.

Le brevet américain US6,950,949 B1 divulgue une méthode émettant une information de légitimité de l'interface d'entrée de nature dynamique et permettant à un utilisateur de déterminer de manière visuelle ou auditive si une interface d'entrée est légitime ou non.

L'invention propose un procédé de sécurisation et un terminal mettant en oeuvre ce procédé qui corrige certaines failles du procédé de l'art antérieur mentionné ci-dessus.

### Objet et résumé de l'invention

Plus précisément, l'invention concerne un procédé de sécurisation d'une application informatique s'exécutant sur un terminal tel que défini par la revendication indépendante 1, un programme d'ordinateur selon la revendication 8 et un support d'enregistrement selon la revendication 10.

Corrélativement, l'invention concerne un dispositif de sécurisation d'une application informatique s'exécutant sur un terminal tel que défini par la revendication indépendante 12.

Ainsi, et d'une façon générale, l'invention propose, comme la technique de l'art antérieur mentionnée précédemment, d'afficher sur l'écran du terminal, une image connue de l'utilisateur de ce terminal, pour renforcer sa confiance sur le fait que l'application informatique qui s'exécute sur le terminal est une application autorisée.

De façon remarquable, contrairement à l'art antérieur, le fichier binaire qui représente l'image secrète connue de l'utilisateur, est mémorisée dans un élément de sécurité du terminal. Cet élément de sécurité peut par exemple être constitué par une carte SIM, un support amovible de type "Secure SD Card" ou un élément de sécurité intégré au terminal ("Embedded Secure Element") ou encore une zone sécurisée du processeur applicatif grâce à l'utilisation d'une technologie de sécurité intégrée dans le processeur (par exemple la technologie TrustZone, marque déposée de la société ARM).

Ainsi, en mémorisant l'image secrète dans l'élément de sécurité, il devient très difficile, pour une application frauduleuse, d'obtenir ce fichier binaire pour créer un écran frauduleux. L'invention garantit l'authenticité de l'image secrète.

Par ailleurs, contrairement à l'art antérieur, l'image affichée sur l'écran du terminal n'est pas la simple image secrète connue de l'utilisateur, mais une image complexe obtenue à partir de cette image secrète et d'une donnée dynamique inaccessible au terminal. Le fait de combiner l'image secrète avec une donnée dynamique (autrement dit de « variabiliser » l'image secrète) augmente considérablement l'entropie de l'image affichée sur l'écran du terminal, si bien que même si une application frauduleuse parvenait à obtenir copie de l'image affichée, elle pourrait très difficilement reconstituer l'image secrète pour tromper l'utilisateur.

L'invention s'applique en particulier pour des applications de paiement sans contact, par exemple conforme à la norme NFC.

Dans ce contexte particulier de mise en oeuvre de l'invention, la donnée dynamique peut être un montant d'une transaction de paiement.

D'une façon générale, il est préférable que la donnée dynamique soit un paramètre de l'application à sécuriser.

Conformément à l'invention, la donnée dynamique est inaccessible au terminal. Cela signifie que les applications du terminal ne peuvent pas obtenir cette donnée dynamique en tant que telle, mais simplement l'image de ces données dynamiques combinée avec l'image secrète.

Conformément à l'invention, le procédé de sécurisation est mis en oeuvre lorsqu'il est détecté que l'application à sécuriser s'apprête à inviter l'utilisateur du terminal à saisir des données.

Cette invitation peut se faire de différentes façons.

Par exemple, l'invitation peut être un message audio invitant l'utilisateur à saisir des données de façon vocale.

Dans ce cas, dès que ce message audio est détecté, on affiche l'image complexe sur l'écran du terminal.

Dans un mode particulier de l'invention, l'invitation se fait par un écran applicatif comportant une zone de saisie textuelle des données.

Dans ce mode de réalisation, la sécurisation consiste à combiner l'image complexe avec cet écran applicatif.

On se rapproche ainsi de la solution de l'art antérieur mais, avec deux différences majeures, selon lesquelles :
- d'une part l'image secrète est mémorisée dans un élément de sécurité du terminal ; et
- d'autre part, l'image secrète est combinée avec une donnée dynamique inaccessible au terminal.

L'invention peut être mise en oeuvre pour sécuriser des applications dans lesquelles les données saisies par l'utilisateur sont validées de façon implicite.

Par exemple, l'invention peut être mise en oeuvre dans un procédé dans lequel on demande à l'utilisateur de saisir un code secret à quatre chiffres, la saisie du 4^{ème} chiffre validant la saisie du code secret.

Mais l'invention, s'applique préférentiellement pour des applications dans lesquelles on demande à l'utilisateur de valider la saisie de façon explicite.

Dans ce mode de réalisation, l'affichage est effectué avant de permettre la validation de la saisie.

On peut ainsi demander à l'utilisateur de confirmer que l'image complexe affichée sur l'écran du terminal correspond à l'image secrète choisie par cet utilisateur.

On peut ainsi attendre une telle confirmation avant de présenter à l'utilisateur des boutons de validation de la saisie.

Deux variantes principales de l'invention peuvent être envisagées.

Selon une première variante, l'application à sécuriser comporte elle-même les moyens pour obtenir l'image secrète, pour constituer l'image complexe, et pour afficher cette image complexe sur l'écran du terminal.

Dans ce mode de réalisation de l'invention, il est nécessaire que l'application puisse accéder à l'élément de sécurité pour obtenir l'image secrète et pour constituer l'image complexe.

Mais il n'est pas indispensable, pour la mise en oeuvre de ce mode de réalisation, que l'application s'exécute elle-même dans l'élément de sécurité.

Dans une deuxième variante de réalisation, l'invention peut être mise en oeuvre par une application de sécurisation afin de sécuriser une autre application informatique.

Il est simplement nécessaire, dans cette variante de réalisation, que l'application de sécurisation puisse obtenir un message de l'application informatique à sécuriser selon lequel celle-ci s'apprête à inviter l'utilisateur à saisir des données.

L'application de sécurisation constitue alors l'image complexe, et la renvoie à l'application à sécuriser qui l'affiche à l'écran. Si, suite à cet affichage, l'utilisateur confirme avoir reconnu l'image secrète, la validation de la saisie peut se faire par une action de l'utilisateur.

Une telle application de sécurisation sera préférentiellement exécutée dans l'élément de sécurité.

Dans un mode particulier de réalisation de l'invention, l'application à sécuriser s'exécute au moins partiellement dans l'élément de sécurité. C'est notamment le cas pour une application de paiement, dans laquelle un module d'interface homme-machine s'exécute sur le terminal, le module en charge du paiement a proprement parler s'exécutant dans l'élément de sécurité.

Dans un mode particulier de réalisation, les différentes étapes du procédé de sécurisation sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes du procédé de sécurisation tel que mentionné ci-dessus.

Dans un mode particulier de l'invention, ce programme comporte en outre des instructions pour exécuter au moins une partie de l'application informatique à sécuriser.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Différentes solutions peuvent être envisagées.

Par exemple, le support d'enregistrement comporte :
- un programme d'ordinateur apte à mettre en oeuvre le procédé de sécurisation selon l'invention, mais pas l'application à sécuriser ; ou
- un programme d'ordinateur apte à mettre en oeuvre l'application à sécuriser et le procédé selon l'invention ; ou
- deux programmes d'ordinateurs indépendants ; l'un pour mettre en oeuvre l'application informatique à sécuriser, l'autre pour mettre en oeuvre le procédé selon l'invention.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un élément de sécurité comportant un dispositif tel que mentionné précédemment.

Dans un mode particulier de réalisation, l'élément de sécurité selon l'invention comporte un domaine de sécurité accessible uniquement par l'application informatique à sécuriser, le fichier binaire étant mémorisé dans ce domaine de sécurité. La notion de domaine de sécurité est par exemple celle proposée par la norme Global Platform et usuellement implémentée dans les éléments de sécurité tels que des cartes SIM/USIM de nouvelle génération.

Cela permet de renforcer la sécurité de la solution, notamment lorsque l'élément de sécurité comporte plusieurs applications informatiques, chacune ayant ainsi accès à sa propre image secrète de façon étanche.

L'invention vise également un terminal comportant un dispositif tel que mentionné ci-dessus ou un élément de sécurité tel que mentionné ci-dessus.

Dans un mode particulier de réalisation, le terminal selon l'invention comporte en outre des moyens, par exemple le système d'exploitation du terminal, aptes à empêcher des copies d'écran du terminal.

Ce mode de réalisation est particulièrement avantageux, car il permet également de sécuriser des applications contre des attaques d'application frauduleuses qui seraient en mesure de détecter l'affichage de l'image complexe selon l'invention et de créer à la volée une copie conforme de cette image pour obtenir frauduleusement les données saisies par l'utilisateur.

### Brève description des dessins

D'autres caractéristiques et avantages de la présente invention ressortiront de la description faite ci-dessous en référence aux dessins qui en illustrent un exemple de réalisation dépourvu de tout caractère limitatif.

Sur les figures :
- la figure 1 représente un écran applicatif d'une application pouvant être sécurisée par l'invention ;
- les figures 2A et 2B représentent une image secrète et une image complexe au sens de l'invention ;
- les figures 3A et 3B représentent des écrans applicatifs sécurisés par l'invention ;
- la figure 4 représente un terminal conforme à un mode particulier de réalisation de l'invention ; et
- la figure 5, représente, sous forme d'organigramme, les principales étapes d'un procédé de sécurisation conforme à un mode particulier de réalisation de l'invention.

### Description détaillée de l'invention

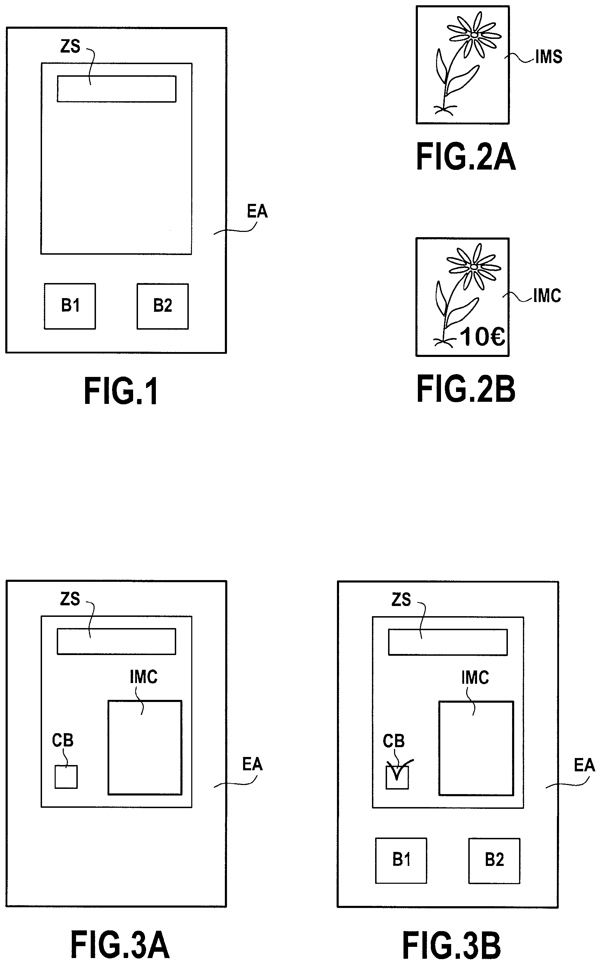

La figure 1 représente un écran applicatif EA d'une application pouvant être sécurisée par l'invention.

Cet écran applicatif comporte une zone de saisie ZS dans laquelle l'utilisateur peut par exemple saisir un code secret et deux boutons B1 et B2 pour valider ou annuler la saisie des données dans la zone ZS.

La figure 2A représente une image secrète IMS au sens de l'invention. Il s'agit d'une image choisie par l'utilisateur du terminal, cette image étant destinée à être mémorisée dans un élément de sécurité du terminal.

La figure 2B représente une image complexe au sens de l'invention.

Cette image complexe est obtenue par combinaison de l'image secrète de la figure 2A et d'une donnée dynamique inaccessible au terminal.

Dans cet exemple, l'application informatique à sécuriser est une application de paiement, et la donnée dynamique est un montant (10 €) d'une transaction que l'utilisateur s'apprête à valider par la saisie d'un code secret.

D'une manière générale, une donnée dynamique dépend de l'application mise en oeuvre sur le terminal mobile. C'est une donnée volatile qui est propre à l'exécution courante de l'application. L'exemple donné ici est un montant de transaction, dans le cadre d'une application de paiement. L'invention n'est bien sûr pas limitée à cet exemple de donnée dynamique. Ainsi, dans un autre exemple de réalisation, la donnée dynamique est une photo du bien à acheter, une caractéristique technique du bien à acheter dont l'utilisateur peut prendre connaissance indépendamment d'une lecture au moyen de son terminal mobile, une photo du vendeur, s'il est en face de lui, etc.

La figure 3A représente l'écran applicatif de la figure 1 combiné avec l'image complexe IMC de la figure 2B.

Cet écran est destiné à être présenté à l'utilisateur pour la saisie des données.

L'utilisateur reconnait alors son image secrète IMS et est donc rassuré sur la conformité de l'application qui affiche cet écran.

Conformément à l'invention, cette image secrète IMS est combinée avec la donnée dynamique constituée ici par le montant de transaction, si bien qu'il est très difficile pour une application frauduleuse de reconstituer cette image complexe. Dans l'exemple présenté en relation avec la figure 2B, la combinaison de l'image secrète avec la donnée dynamique consiste en une superposition de la donnée dynamique sur l'image secrète. Dans d'autres exemples de réalisation, la combinaison consiste à afficher côte à côte la donnée dynamique et l'image secrète, ou à présenter alternativement à l'écran sur une période de temps courte de l'ordre de la seconde l'image secrète et la donnée dynamique. D'une manière générale, toute combinaison de la donnée dynamique avec l'image secrète est envisageable, à partir du moment où l'utilisateur perçoit dans cette image complexe la présence de la donnée dynamique et de son image secrète.

Dans l'exemple de la figure 3A, une "check box" CB est présentée à l'utilisateur pour lui demander de confirmer qu'il a bien reconnu l'image complexe IMS avant de lui présenter les boutons de validation de la saisie.

L'écran applicatif comportant ses boutons de validation est présenté à la figure 3B.

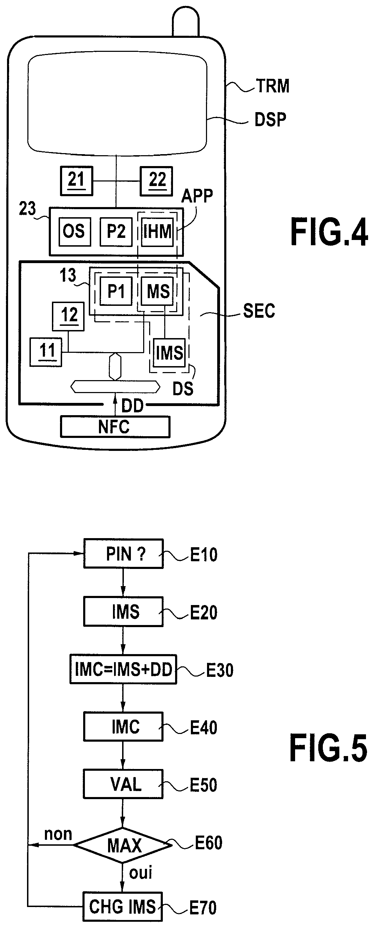

La figure 4 représente un terminal TRM conforme à l'invention.

Ce terminal comporte :
- un écran DSP ;
- un processeur 21 apte à mettre en oeuvre les fonctions classiques d'un terminal de communications ;
- une mémoire vive de type RAM 22 ;
- une mémoire morte de type ROM 23 comportant, dans cet exemple, un système d'exploitation OS, un programme P2 exécuté par le processeur 21 pour mettre en oeuvre les fonctions classiques du terminal et un module IHM de l'application à sécuriser APP, ce module IHM réalisant l'interface entre l'utilisateur et le module sécurisé MS de cette application ;
- un élément sécurisé SEC constitué ici par une carte SIM ; et
- un module de communication NFC ("Near Field Communication"), ce module de communication permettant notamment au terminal d'effectuer des transactions de paiement avec un lecteur non représenté. Plus précisément, ce module de communication permet des échanges de données, ces échanges constituant les transactions, entre le lecteur, ou borne sans contact, et une application installée dans le module de sécurité.

L'élément sécurisé SEC comporte ici un processeur 11, une mémoire RAM de type 12 et une mémoire morte de type ROM 13.

Cette mémoire morte de type ROM 13 constitue un support au sens de l'invention. Elle comporte le module sécurisé MS de l'application APP à sécuriser et un programme d'ordinateur P1 conforme à l'invention. Ce programme d'ordinateur comporte des instructions pour permettre l'exécution des étapes du procédé de sécurisation selon l'invention qui sera décrit ultérieurement en référence à la figure 5.

Conformément à l'invention, l'élément de sécurisation comporte également un fichier binaire comportant l'image secrète IMS de la figure 2A.

Dans le mode de réalisation décrit ici, ce fichier binaire est mémorisé dans un domaine de sécurité DS propre à l'application APP.

L'élément de sécurité SEC comporte également un bus pour recevoir des données de transaction et notamment des montants de transaction. Plus précisément, ces montants sont directement reçus de la borne sans contact au cours d'une transaction. En particulier, ils ne transitent pas par une mémoire du terminal TRM. En ce sens, ces montants, qui constituent les données dynamiques sont inaccessibles au terminal TER.

Ces montants de transaction constituent des données dynamiques aptes à être combinées avec l'image sécurité IMS pour présentation à l'utilisateur du terminal.

En référence à la figure 5, nous allons maintenant décrire un mode particulier de réalisation de l'invention.

Au cours d'une étape E10, le processeur 11 de l'élément de sécurité SEC obtient une information selon laquelle l'application APP s'apprête à inviter l'utilisateur du terminal TRM à saisir des données.

Cette étape peut consister à recevoir un message particulier du module sécurisé MS de l'application de paiement APP.

Au cours d'une étape E20, le processeur 11 accède au fichier binaire mémorisé dans l'élément de sécurité DS pour obtenir l'image secrète IMS connue de l'utilisateur du terminal.

Au cours d'une étape E30, le processeur 11 combine cette image secrète IMS avec des données dynamiques DD correspondant au montant d'une transaction. On notera que les données dynamiques DD ne sortent jamais de l'élément sécurisé SEC. En effet, les données dynamiques DD ont été reçues par l'intermédiaire du module NFC qui les a directement communiquées au domaine de sécurité DS dans lequel l'application P1 les a exploitées. Elles sont simplement combinées, sous forme d'image à l'image secrète IMS pour constituer une image complexe IMC.

L'image complexe IMC est présentée à l'utilisateur au cours d'une étape E40. Cette image complexe est, dans cet exemple, combinée avec l'écran applicatif EA de l'application APP comme représenté à la figure 3A.

Si l'utilisateur coche la "check box" CB, cette opération étant interprétée comme le fait que l'utilisateur a reconnu l'image secrète IMS, on lui présente les boutons B1 et B2 de validation ou d'annulation de la saisie comme représenté à la figure 3B.

On suppose que l'utilisateur valide la saisie des données secrètes au cours d'une étape E50.

Dans le mode de réalisation décrit ici, au cours d'une étape E60, on vérifie si l'image sécurisée IMS a été lue, un nombre MAX prédéterminé de fois.

Si tel est le cas, on invite l'utilisateur, au cours d'une étape E70, à changer l'image secrète mémorisée dans le domaine de sécurité DS.

Le processeur 11, les mémoires 12 et 13, et le programme d'ordinateur P1 constituent un exemple de dispositif de sécurisation au sens de d'invention, pour sécuriser l'application informatique APP, en ce qu'ils offrent :
- des moyens pour obtenir d'une information selon laquelle l'application APP s'apprête à inviter un utilisateur du terminal TRM à saisir des données ;
- des moyens d'accès à un fichier binaire représentatif d'une image secrète connue de l'utilisateur du terminal, ce fichier binaire étant mémorisé dans un élément de sécurité du terminal ;
- des moyens pour constituer, dans l'élément de sécurité, une image complexe obtenue à partir de l'image secrète et d'une donnée dynamique inaccessible audit terminal ; et
- des moyens pour afficher cette image complexe sur un écran du terminal.

## Revendications

1. Procédé de sécurisation d'une application informatique (APP) s'exécutant sur un terminal (TRM) comprenant un écran (DSP) et un élément de sécurité (SEC), ce procédé comportant :
- une étape (E10) d'obtention, par l'élément de sécurité (SEC), d'une information selon laquelle ladite application s'apprête à inviter un utilisateur du terminal à saisir des données ;
- une étape (E20) d'accès, par l'élément de sécurité (SEC), à un fichier binaire représentatif d'une image secrète connue de l'utilisateur du terminal, ce fichier binaire étant mémorisé dans l'élément de sécurité (SEC) du terminal ;
- une étape (E30) pour constituer, dans ledit élément de sécurité, une image complexe obtenue par combinaison de ladite image secrète et d'une donnée dynamique ne sortant jamais de l'élément de sécurité et donc inaccessible audit terminal ; et
- une étape (E40) pour afficher ladite image complexe sur l'écran (DSP) du terminal.

2. Procédé de sécurisation selon la revendication 1 **caractérisé en ce que** ledit affichage (E40) est effectué avant validation (E50) de ladite saisie.

3. Procédé de sécurisation selon la revendication 1, dans lequel ladite invitation consiste à afficher un écran applicatif comportant une zone de saisie (ZS) desdites données, **caractérisé en ce que** ladite étape d'affichage (E40) consiste à afficher une image obtenue par combinaison, au sein dudit élément de sécurité, dudit écran applicatif (EA) avec ladite image complexe (IMC).

4. Procédé de sécurisation selon la revendication 1, **caractérisé en ce qu'**il comporte une étape (E70) pour inciter l'utilisateur à changer ladite image secrète.

5. Procédé de sécurisation selon la revendication 1, **caractérisé en ce que** ladite application (APP) s'exécute au moins partiellement dans ledit élément de sécurité (SEC).

6. Procédé de sécurisation selon la revendication 1, **caractérisé en ce que** ladite donnée dynamique (DD) est un paramètre de ladite application.

7. Procédé de sécurisation selon la revendication 6, **caractérisé en ce que**, ladite application est une application de paiement sans contact, ladite donnée dynamique est le montant d'une transaction.

8. Programme d'ordinateur (P1) comportant des instructions pour l'exécution de chacune des étapes du procédé de sécurisation selon l'une quelconque des revendications 1 à 7, lorsque ledit programme est exécuté par un processeur (11).

9. Programme d'ordinateur selon la revendication 8, **caractérisé en ce qu'**il comporte en outre des instructions pour exécuter au moins une partie (MS) de ladite application informatique lorsque ledit programme est exécuté par ledit processeur.

10. Support d'enregistrement (13) lisible par un ordinateur sur lequel est enregistré un programme d'ordinateur selon la revendication 8 ou 9.

11. Support d'enregistrement selon la revendication 10, **caractérisé en ce qu'**il comporte un premier programme (PM) selon la revendication 9 et un deuxième programme, indépendant dudit premier programme, ce deuxième programme comportant des instructions pour exécuter au moins une partie (MS) de ladite application informatique (APP) lorsque ledit programme est exécuté par un processeur (L11).

12. Terminal (TRM) configuré pour exécuter une application informatique (APP), ledit terminal comprenant un écran (DSP) et un élément de sécurité (SEC); ledit élément de sécurité (SEC) comportant :
- des moyens d'obtention d'une information selon laquelle ladite application s'apprête à inviter un utilisateur du terminal à saisir des données ;
- des moyens d'accès à un fichier binaire représentatif d'une image secrète connue de l'utilisateur du terminal, ce fichier binaire étant mémorisé dans un élément de sécurité (SEL) du terminal ;
- des moyens pour constituer, dans ledit élément de sécurité, une image complexe obtenue par combinaison de ladite image secrète et d'une donnée dynamique ne sortant jamais de l'élément de sécurité et donc inaccessible audit terminal ; et
- des moyens pour afficher ladite image complexe sur un écran du terminal.

13. Terminal selon la revendication 12, **caractérisé en ce que** l'élément de sécurité (SEC) comporte un domaine de sécurité (DS) propre à ladite application informatique (APP), ledit fichier binaire étant mémorisé dans ce domaine de sécurité.

14. Terminal selon la revendication 12, **caractérisé en ce qu'**il comporte des moyens aptes à empêcher les copies d'écran dudit terminal.

## Patentansprüche

1. Verfahren zur Sicherung einer Computeranwendung (APP), die auf einem Endgerät (TRM) ausgeführt wird, mit einem Display (DSP) und einem Sicherheitselement (SEC), umfassend:
- einen Schritt (E10) des Erhalts einer Information durch das Sicherheitselement (SEC), gemäß der sich die Anwendung darauf vorbereitet, einen Benutzer des Endgerätes zur Eingabe von Daten aufzufordern;
- einen Schritt (E20), des Zugreifens durch das Sicherheitselement (SEC) auf eine Binärdatei, welche ein geheimes Bild darstellt, das der Benutzer des Endgerätes kennt, wobei diese Binärdatei im Sicherheitselement (SEC) des Endgerätes gespeichert ist;
- einen Schritt (E30) zur Herstellung eines komplexen Bildes im Sicherheitselement, das durch Verknüpfung des geheimen Bildes mit einem dynamischen Datensatz entsteht und niemals das Sicherheitselement verlässt und somit für das Endgerät nicht zugänglich ist; und
- einen Schritt (E40) zur Anzeige des komplexen Bildes auf dem Display (DSP) des Endgerätes.

2. Verfahren zur Sicherung gemäß Anspruch 1, **dadurch gekennzeichnet, dass** die Anzeige (E40) vor der Bestätigung (E50) der Eingabe erfolgt.

3. Verfahren zur Sicherung gemäß Anspruch 1, bei dem die Aufforderung darin besteht, ein Anwendungsdisplay mit einem Eingabebereich (ZS) für die Daten anzuzeigen, **dadurch gekennzeichnet, dass** der Schritt des Anzeigens (E40) darin besteht, ein Bild anzuzeigen, das durch die Verknüpfung des Anwendungsdisplays (EA) mit dem komplexen Bild (IMC) im Sicherheitselement erhalten wird.

4. Verfahren zur Sicherung gemäß Anspruch 1, **dadurch gekennzeichnet, dass** es einen Schritt (E70) umfasst, um den Benutzer anzuregen, das geheime Bild auszuwechseln.

5. Verfahren zur Sicherung gemäß Anspruch 1, **dadurch gekennzeichnet, dass** die Anwendung (APP) zumindest teilweise im Sicherheitselement (SEC) ausgeführt wird.

6. Verfahren zur Sicherung gemäß Anspruch 1, **dadurch gekennzeichnet, dass** es sich bei dem dynamischen Datensatz (DD) um einen Parameter der Anwendung handelt.

7. Verfahren zur Sicherung gemäß Anspruch 6, **dadurch gekennzeichnet, dass** es sich bei der Anwendung um eine kontaktlose Zahlungsanwendung und bei dem dynamischen Datensatz um den Betrag einer Transaktion handelt.

8. Computerprogramm (P1), das Anweisungen zur Ausführung jedes der Schritte des Verfahrens zur Sicherung gemäß einem der vorhergehenden Ansprüche 1 bis 7 umfasst, wenn das Programm von einem Prozessor (11) ausgeführt wird.

9. Computerprogramm gemäß Anspruch 8, **dadurch gekennzeichnet, dass** es weiterhin Anweisungen zur Ausführung mindestens eines Teils (MS) der Computeranwendung umfasst, wenn das Programm vom Prozessor ausgeführt wird.

10. Aufzeichnungsmedium (13), das von einem Computer lesbar ist, auf dem ein Computerprogramm nach Anspruch 8 oder 9 gespeichert ist.

11. Aufzeichnungsmedium gemäß Anspruch 10, **dadurch gekennzeichnet, dass** es ein erstes Programm (PM) gemäß Anspruch 9 und ein zweites Programm umfasst, das vom ersten Programm unabhängig ist, und wobei das zweite Programm Anweisungen zur Ausführung mindestens eines Teils (MS) der Computeranwendung (APP) umfasst, wenn das Programm von einem Prozessor (L11) ausgeführt wird.

12. Endgerät (TRM), das zur Ausführung einer Computeranwendung (APP) konfiguriert ist, wobei das Endgerät ein Display (DSP) und ein Sicherheitselement (SEC) umfasst, wobei das Sicherheitselement (SEC) Folgendes umfasst:
- Mittel zum Erhalt einer Information, gemäß der sich die Anwendung darauf vorbereitet, einen Benutzer des Endgerätes zur Eingabe von Daten aufzufordern;
- Mittel zum Zugreifen auf eine Binärdatei, welche ein geheimes Bild darstellt, das der Benutzer des Endgerätes kennt, wobei diese Binärdatei im Sicherheitselement (SEC) des Endgerätes gespeichert ist;
- Mittel zum Herstellen eines komplexen Bildes im Sicherheitselement, das durch Verknüpfen des geheimen Bildes mit einem dynamischen Datensatz entsteht und niemals das Sicherheitselement verlässt und somit für das Endgerät nicht zugänglich ist; und
- Mittel zum Anzeigen des komplexen Bildes auf einem Display des Endgerätes.

13. Endgerät gemäß Anspruch 12, **dadurch gekennzeichnet, dass** das Sicherheitselement (SEC) eine für die Computeranwendung (APP) spezifische Sicherheitsdomäne (DS) umfasst, wobei die Binärdatei in dieser Sicherheitsdomäne gespeichert ist.

14. Endgerät gemäß Anspruch 12, **dadurch gekennzeichnet, dass** es Mittel umfasst, die Screenshots des Displays des Endgerätes verhindern können.

## Claims

1. Method of securing a computing application (APP) executing on a terminal (TRM) comprising a screen (DSP) and a security element (SEC), this method comprising:
- a step (E10) of obtaining, by the security element (SEC), an information item according to which said application is getting ready to invite a user of the terminal to enter data;
- a step (E20) of accessing, by the security element (SEC), a binary file representative of a secret image known to the user of the terminal, this binary file being stored in the security element (SEC) of the terminal;
- a step (E30) for constructing, in said security element, a complex image obtained by combining said secret image and a dynamic datum that never exits the security element and is therefore inaccessible to said terminal; and
- a step (E40) for displaying said complex image on the screen (DSP) of the terminal.

2. Method of securing according to Claim 1, **characterized in that** said display (E40) is performed before validation (E50) of said entry.

3. Method of securing according to Claim 1, in which said invitation consists in displaying an application-related screen comprising a zone of entry (ZS) of said data, **characterized in that** said display step (E40) consists in displaying an image obtained by combining, within said security element, said application-related screen (EA) with said complex image (IMC) .

4. Securing method according to Claim 1, **characterized in that** it comprises a step (E70) for prompting the user to change said secret image.

5. Securing method according to Claim 1, **characterized in that** said application (APP) executes at least partially in said security element (SEC).

6. Securing method according to Claim 1, **characterized in that** said dynamic datum (DD) is a parameter of said application.

7. Securing method according to Claim 6, **characterized in that**, said application is a contactless payment application, said dynamic datum is the amount of a transaction.

8. Computer program (P1) comprising instructions for the execution of each of the steps of the securing method according to any one of Claims 1 to 7, when said program is executed by a processor (11).

9. Computer program according to Claim 8, **characterized in that** it furthermore comprises instructions for executing at least one part (MS) of said computing application when said program is executed by said processor.

10. Recording medium (13) readable by a computer on which is recorded a computer program according to Claim 8 or 9.

11. Recording medium according to Claim 10, **characterized in that** it comprises a first program (PM) according to Claim 9 and a second program, independent of said first program, this second program comprising instructions for executing at least one part (MS) of said computing application (APP) when said program is executed by a processor (L11).

12. Terminal (TRM) configured to execute a computing application (APP), said terminal comprising a screen (DSP) and a security element (SEC);
said security element (SEC) comprising:
- means for obtaining an information item according to which said application is getting ready to invite a user of the terminal to enter data;
- means for accessing a binary file representative of a secret image known to the user of the terminal, this binary file being stored in a security element (SEL) of the terminal;
- means for constructing, in said security element, a complex image obtained by combining said secret image and a dynamic datum that never exits the security element and is therefore inaccessible to said terminal; and
- means for displaying said complex image on a screen of the terminal.

13. Terminal according to Claim 12, **characterized in that** the security element (SEC) comprises a security domain (DS) specific to said computing application (APP), said binary file being stored in this security domain.

14. Terminal according to Claim 12, **characterized in that** it comprises means able to prevent screen copies of said terminal.
